# EUROPEAN PATENT SPECIFICATION

(11) **EP 0 440 488 B1**
(45) Date of publication and mention of the grant of the patent: **06.09.1995**
(21) Application number: 91300797.7
(22) Date of filing: 31.01.1991
(51) Int. Cl.: B60P 1/54, B60P 3/00

(54) **Vehicle for collecting crust and carbon remainders from electrolysis cells**
Fahrzeug zum Sammeln von Krusten- und Kohleresten von Elektrolysezellen
Véhicule pour collecter des résidus de croûte et charbon de cellules de production électrolytique

(30) Priority: 02.02.1990 NO 900494
(43) Date of publication of application: 07.08.1991
(73) Proprietor: HYDEQ A.S., N-5870 Ovre Ardal (NO)
(72) Inventor: Holsaeter, Arnt Ove, N-5875 Ardalstangen (NO); Dronnesund, Kjartan, N-5875 Ardalstangen (NO)
(74) Representative: Allen, Oliver John Richard

(56) References cited:
- GB-A- 930 621
- GB-A- 1 075 584
- US-A- 3 876 095
- US-A- 3 954 194

## Description

The present invention relates to a vehicle for collecting crust and carbon remainders from electrolysis cells producing aluminium, comprising a chassis carried on wheels with a propelling engine and a drivers cabin.

Industrial production of aluminium is carried out in an electrolytic cell having a bath of cryolite in which is dissolved aluminium oxide and small amounts of other additives, basically aluminium fluoride and calcium fluoride, at temperatures of about 950° - 970° C. With the so-called Hall-Heroult process, named after the inventors, the aluminium is produced by reduction of the aluminium oxide, and the aluminium thus produced is accumulated in a liquid state on the bottom forming the actual cathode of the cell. Carbon anodes, made from petrol coke and tar, are submerged in the electrolytic bath. On the parts of the anodes being submerged in the electrolytic bath, the aluminium oxide is reduced to form oxygen which immediately reacts with the carbon of the anode, whereby gaseous carbon dioxide is formed.

Usually, the electrolysis cells have approximately 20 such prebaked anodes which are gradually consumed and have to be exchanged after 20-24 days. Thus, in each cell one anode is exchanged every day.

The melt bath is covered with a crust of hardened cryolite with an aluminium oxide layer on top. Since the anodes are submerged in the bath, the crust partly covers and is stuck to the anodes. When the anodes are consumed, they may be wholly covered with crust. Thus, as the anodes are exchanged, they have to be released from the crust before they are pulled out. This is basically done by breaking up the crust around the anodes. In some situations the anodes may even be just pulled out without being released from the crust beforehand. However, in both occasions pieces of crust, and eventually pieces of carbon from the anode, will fall down to the bottom of the anode and create difficulties and problems in connection with the operation of the cells and will have to be removed.

The collection of remainders from the bottom of the cells is done manually by operators using special tools. This work is time consuming and dangerous due to the high temperature of the cell bath.

US3876095 discloses a material handling apparatus having a grab bucket suspended by a cable from the end of a crane, the grab bucket being hydraulically operated by means of hydraulic hoses which run adjacent to the cable.

It has been an object with the present invention to provide a vehicle for collecting remainders of crust and carbon form aluminium electrolysis cells, by means of which the collection can be done swiftly and effectively, without danger to the operators. It has been a further object to design the vehicle so that it in a simple way can be manoeuvred close up to and in between the cells, and the collection equipment is positioned on the vehicle and is so constructed that such manoeuvre is made possible. It has been still another object to reduce the height of the vehicle to prevent it from touching building constructions, material conveying equipment, ducts and the like.

According to the invention, a vehicle for collecting crust and carbon remainders from aluminium electrolysis cells comprises a chassis carried on wheels with a propelling engine and a driver's cabinet, characterised in that a collecting device in the form of a grab bucket is mounted on the outer end of a boom and in that the grab bucket is connected to the boom via a link whereby the grab bucket can be rotated about a vertical axis, a tub or container being provided on the chassis for holding the remainders collected from the electrolysis cell.

Preferably the boom consists of a generally horizontal telescopic beam which can be lowered or lifted by means of parallel stays disposed on a turn table. Alternatively, the boom may comprise an outer parallel stay linked to an inner parallel stay provided on the chassis, the parallel stays being moveable by means of piston/cylinder devices.

The grab can be turned sideways so that the vehicle can be used in any orientation with respect to an electrolysis cell.

The collecting device is preferably situated in the middle of the chassis and may be located in a recess therein, to provide a compact vehicle.

A platform may be provided above the collection device on which a lifting boom may be rotatably mounted for lifting anodes into and out of an electrolysis cell.

The invention will now be described further by way of example with reference to the drawings in which,
Figure 1 shows a vertical view of a vehicle for collecting crust and carbon remainders from an electrolytic cell,
Figure 2 shows a front view of the same vehicle,
Figure 3 shows a vertical view of an alternative design of such vehicle,
Figure 4 shows a rear view of the vehicle shown in Figure 3.
Figure 5 shows the same vehicle as is shown in Figure 4, but with the collecting equipment being in a stretched out position.

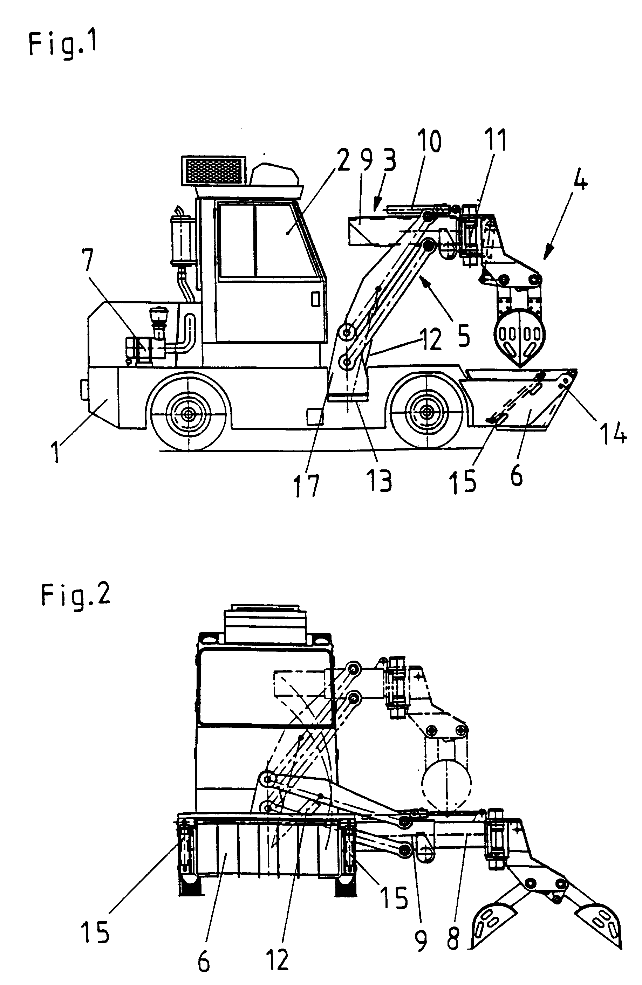

The vehicle comprises, as is apparent from figure 1 and figure 2, a chassis 1 carried on wheels with a propelling engine 7, and driver's cabin 2. On the chassis close to the cabin 2 is provided a turnable collecting device in the form of a grab bucket 4 being disposed on the outer end of derrick 3,5. The derrick comprises an upper, generally horizontal telescopic boom 3 which can be raised or lowered by means of parallel stays 5 on a turntable 17. The lifting and lowering is accomplished by means of a piston/cylinder device 12. The boom 3 comprises an outer telescopic element 8 and an inner guide element 9.

The telescopic element 8 is slideable relative to the element 9 by means of a piston/cylinder device 10. With regard to the grab bucket 4, this is turnably mounted to a telescopic element 8 by means of a joint 11. A piston/cylinder device (not shown) is provided to turn the grab 4 in both directions. The collecting device 3,4,5 is, as indicated above, turnably disposed on the chassis 1. More precisely, it can, by turning the turntable 17, be turned in each direction relative to the vehicle. To obtain low construction height, the collecting device is disposed in a recess 13 in the chassis 1. In figure 1 the collecting device is shown in a lifted position reaching towards the front of the vehicle, whereas figure 2 shows the collecting device swung sideways relative to the vehicle in both a lowered position where the grab bucket is open and (in dotted lines) in a lifted position where the grab bucket is closed.

Additionally, the front of the vehicle is provided with a container 6 for temporarily keeping the crust and carbon remainders. In the example shown in the drawings, the container is swingably mounted on the chassis by means of rings 14, and can be tilted to be emptied by means of a piston/cylinder device 15.

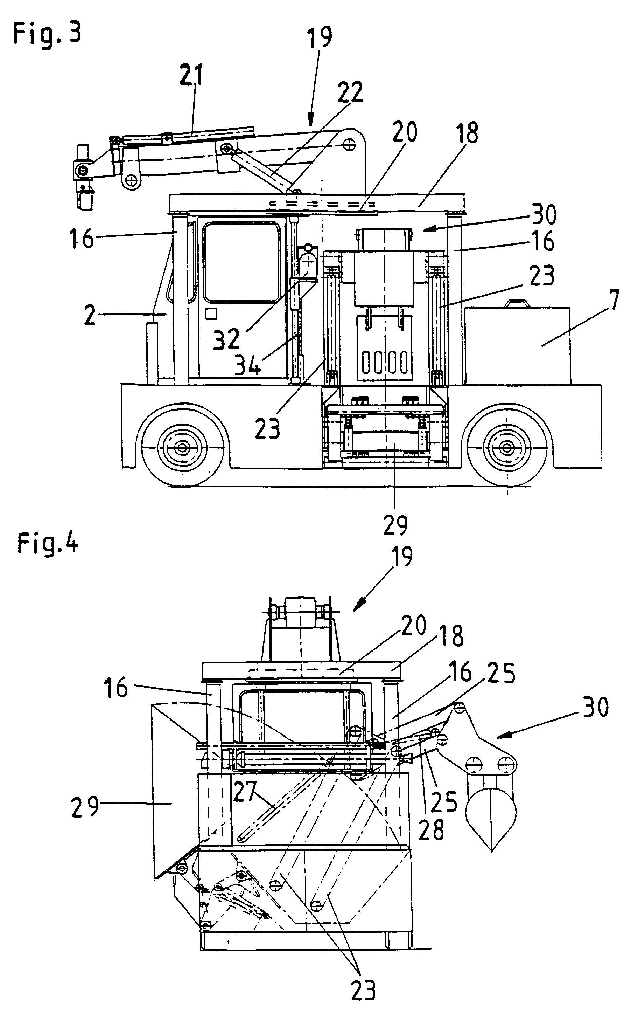

Figures 3-5 show an alternative embodiment of a vehicle according to the invention. Here, the collecting device is also provided in a recess on the chassis at its middle, but it is not able to turn sideways, as in the previous example. The reason for not doing so, is that there is provided a platform 18 above the collecting device resting on four poles 16. On the platform is turnably mounted a lifting boom 19 for lifting and positioning of the anodes in the electrolytic cells. The lifting boom 19 is telescopic and can, if necessary be turned 360° C about a bearing 20. Hydraulic piston/cylinder devices 21,22 turn and lower/lift the lifting boom.

With regard to the collecting device, it is composed of an interlinked parallel stay comprising inner parallel stays 23 being linked with outer parallel stays 25. Each of the parallel stays 23,25 can be moved by means of hydraulic piston/cylinder devices 27, 28 respectively.

The vehicle according to figures 3-5 is also provided with a container 29 which is provided in a recess in the chassis between the parallel stays 23. Figure 4 shows the container in a lifted (tilted) position and in a resting position.

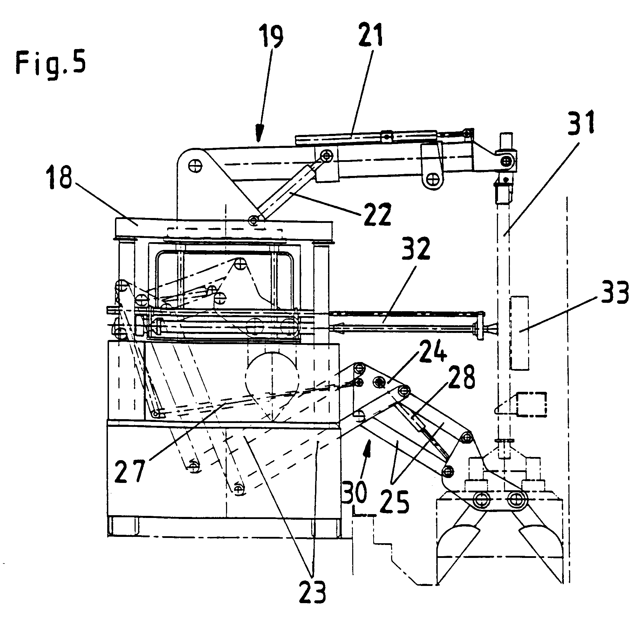

Figure 5 shows the boom 30 for the collecting equipment in an outer position and in an inner position (dotted lines). The lifting boom 19 is also shown in an outer position with an anode 31 connected thereto. Still further figure 5 shows an hydraulic pressure device 32 which is provided to hold the anode hanger against the anode beam 33 of the electrolytic cell in connection with an anode changing operation. The pressure device 32 is slideably mounted on a guide 34.

It should be noted that the engine 7 and cabin 2 shown in figures 3-5 are each disposed at one end of the chassis.

The advantage with the embodiment of the invention shown in figures 3-5, is that it represents a compact solution where the collecting crust and carbon remainders as well as the exchange of anodes can be accomplished by means of one vehicle. As mentioned above, a motor (not shown) propels the vehicle. Hydraulic transmission is advantageously chosen because the hydraulic pump also may provide pressure fluid for the hydraulic piston/cylinder devices. However, the invention is not in any way limited to the use of hydraulics. Thus, a mechanical or electromechanical driving may be used.

## Claims

1. A vehicle for collecting crust and carbon remainders from aluminium electrolysis cells comprising a chassis carried on wheels with a propelling engine and a driver's cabin, characterised in that a collecting device in the form of a grab bucket (4) is mounted on the outer end of a boom and in that the grab bucket (4) is connected to the boom (3,30) via link (11) whereby the grab bucket (4) can be rotated about a vertical axis, a tub or container (6) being provided on the chassis for holding the remainders collected from the electrolysis cell.

2. A vehicle according to Claim 1, characterised in that the boom consists of a substantially horizontal telescopic beam (3) which can be lowered or lifted by means of parallel stays (5) disposed on a turntable (17).

3. A vehicle according to Claim 1 or 2, characterised in that the boom comprises an outer parallel stay (25) being linked to an inner parallel stay (23) provided on the chassis, and that the parallel stays (23,25) can be moved by means of hydraulic position/cylinder devices (27,28).

4. A vehicle according to any of Claims 1, 2 or 3, characterised in that the collecting device is provided generally in the middle of the chassis.

5. A vehicle according to any preceding Claim characterised in that the collecting device is disposed in a transverse recess (13) provided in the chassis.

6. A vehicle according to any preceding Claim, characterised in that a platform (18) is provided above the collecting device, and that a turntable boom (19) is disposed on the platform to handle anodes for the electrolysis cells.

7. A vehicle according to Claim 3, characterised in that a tub (29) is provided in the recess in the chassis between the parallel stays (23).

8. A vehicle according to Claim 1 or 2, characterised in that the tub (6) is provided at the front of the vehicle.

## Patentansprüche

1. Fahrzeug zum Sammeln von Krusten- und Kohlenstoffresten aus Aluminiumelektrolysezellen, welches einen auf Rädern sitzenden Rahmen mit einem Vortriebsmotor und einer Fahrerkabine aufweist, dadurch gekennzeichnet, daß eine Sammelvorrichtung in Form eines Greiferkübels (4) an dem äußeren Ende eines Auslegers angebracht ist und daß der Greifkübel (4) mit dem Ausleger (3, 30) über Gelenk (11) verbunden ist, wodurch der Greiferkübel (4) um eine vertikale Achse gedreht werden kann, wobei eine Wanne oder Behälter (6) zum Fassen der aus der Elektrolysezelle gesammelten Reste vorgesehen ist.

2. Fahrzeug nach Anspruch 1, dadurch gekennzeichnet, daß der Ausleger aus einem im wesentlichen horizontalen teleskopischen Balken (3) besteht, der mittels Parallelstreben (5), die auf einem Drehtisch (17) angeordnet sind, abgesenkt und angehoben werden kann.

3. Fahrzeug nach Anspruch 1 oder 2, dadurch gekennzeichnet, daß der Ausleger eine äußere Parallelstrebe (25) aufweist, die an einer auf dem Rahmen vorgesehenen inneren Parallelstrebe (23) angelenkt ist, und daß die Parallelstreben(23, 25) mittels hydraulischer Positions/Zylinder-Vorrichtungen (27, 28) bewegt werden können.

4. Fahrzeug nach irgendeinem der Ansprüche 1, 2 oder 3, dadurch gekennzeichnet, daß die Sammelvorrichtung allgemein in der Mitte des Rahmens vorgesehen ist.

5. Fahrzeug nach irgendeinem vorstehenden Anspruch, dadurch gekennzeichnet, daß die Sammelvorrichtung in einer in dem Rahmen vorgesehenen Querausnehmung (13) angeordnet ist.

6. Fahrzeug nach irgendeinem vorstehenden Anspruch, dadurch gekennzeichnet, daß eine Plattform (18) oberhalb der Sammelvorrichtung vorgesehen ist, und daß ein Drehtischausleger (19) auf der Plattform zur Handhabung von Anoden für die Elektrolysezellen angeordnet ist.

7. Fahrzeug nach Anspruch 3, dadurch gekennzeichnet, daß eine Wanne (29) in der Ausnehmung im Rahmen zwischen den Parallelstreben (23) vorgesehen ist.

8. Fahrzeug nach Anspruch 1 oder 2, dadurch gekennzeichnet, daß die Wanne (6) an der Vorderseite des Fahrzeugs vorgesehen ist.

## Revendications

1. Véhicule destiné à collecter des restes de carbone et de croûte des cellules d'électrolyse d'aluminium, comprenant un châssis porté par des roues et muni d'un moteur de propulsion et d'une cabine pour un conducteur, caractérisé en ce qu'un dispositif collecteur sous forme d'une benne preneuse (4) est monté à l'extrémité externe d'une flèche, et en ce que la benne preneuse (4) est raccordée à la flèche (3, 30) par une bielle (11) de manière que la benne preneuse (4) puisse tourner autour d'un axe vertical, une cuve ou un récipient (6) étant placé sur le châssis afin qu'il contienne les restes collectés dans la cellule d'électrolyse.

2. Véhicule selon la revendication 1, caractérisé en ce que la flèche comporte une poutre télescopique pratiquement horizontale (3) qui peut être abaissée et soulevée à l'aide de bras parallèles (5) placés sur une plateau tournant.

3. Véhicule selon la revendication 1 ou 2, caractérisé en ce que la flèche comporte un bras parallèle externe (25) raccordé à un bras parallèle interne (23) placé sur le châssis, et en ce que les bras parallèles (23, 25) peuvent être déplacés par des vérins hydrauliques (27, 28).

4. Véhicule selon l'une des revendications 1, 2 et 3, caractérisé en ce que le dispositif collecteur est placé de façon générale au milieu du châssis.

5. Véhicule selon l'une quelconque des revendications précédentes, caractérisé en ce que le dispositif collecteur est placé dans une cavité transversale (13) disposée dans le châssis.

6. Véhicule selon l'une quelconque des revendications précédentes, caractérisé en ce qu'une plate-forme (18) est disposée au-dessus du dispositif collecteur, et une flèche (19) d'un plateau tournant est placée sur la plate-forme pour la manutention d'anodes provenant des cellules d'électrolyse.

7. Véhicule selon la revendication 3, caractérisé en ce qu'une cuve (29) est placée dans la cavité du châssis entre les bras parallèles (23).

8. Véhicule selon la revendication 1 ou 2, caractérisé en ce que la cuve (6) est placée en avant du véhicule.
